# EUROPEAN PATENT APPLICATION

(11) **EP 2 055 844 A2**
(43) Date of publication of application: **06.05.2009**
(21) Application number: 08168156.1
(22) Date of filing: 03.11.2008
(51) Int. Cl.: E03F 5/06

(54) **Grating fixed with screws**

(30) Priority: 02.11.2007 DK 200700275 U
(71) Applicant: Blücher Metal A/S, 7480 Vildbjerg (DK)
(72) Inventor: Lohmann, Hans, 4180 Sorø (DK)
(74) Representative: Nielsen, Leif

(57) **Abstract**

Grating (1) for floor drains is described, having at least two screws (2) at the edge area of the grating for securing the grating to a waste water bowl (4). Each screw is provided with a washer (7) for securing the screw onto the grating. Each washer is resilient and has a central opening (14) engaging a recess (6) below the screw head (5) and having a diameter which is smaller than the outer diameter of the screw thread (17).

## Description

### Field of the Invention

The present invention relates to a grating for floor drains having at least two screws at the edge area thereof for securing the grating to a waste water bowl, and each screw being provided with a washer for securing the screw to the grating.

### Background of the Invention

It is known to provide floor drain gratings with screws along an edge area, e.g. at the angles of a quadrangular grating. In order to secure the screws to the grating, a nylon washer would frequently be arranged in an interference fit around the screw shaft after the screw having been mounted in an opening in the grating.

Such washer has turned out to be appropriate by transport and mounting of a grating on a waste water bowl. However, a problem occurs when the grating should be removed from the waste water bowl. By removal the grating would be secured to the waste water bowl by at least two screws. When loosening the first screw the remaining screws will still keep the grating in its position against the waste water bowl. Therefore, the screw will not only be screwed off the thread in the waste water bowl, but also off the washer. Consequently, there is an immediate risk of loss of both screw and washer.

The need for a construction by which the screws remain practically locked or secured to the grating during the removal thereof from the waste water bowl, e.g. by cleaning of the waste water bowl, has existed for a number of years.

### Object of the Invention

It is the object of the present invention to eliminate this problem by indicating a grating in which all screws remain secured on the grating during its removal from the waste water bowl.

### Description of the Invention

According to the present invention this object is achieved by a grating of the kind mentioned in the introduction and being characterized in that each washer is resilient and has a central opening engaging a recess below the screw head and having a smaller diameter than the outer diameter of the screw thread.

Since the diameter of the washer opening is less than the outer diameter of the thread and due to the resilience of the washer it could be pressed over the thread and could be arranged in the recess when the screw is mounted in an opening in the grating. The washer will be secured in the recess due to the diameter difference. After mounting the grating on a waste water bowl the washer will in the conventional way be wedged in between the lower side of the grating and a surface of the waste water bowl, e.g. a surface of a threaded bush in the waste water bowl.

By loosening of a screw the resilience of the washer will secure the engagement of the screw with the recess, so that the edge area of the grating is raised during the screwing off of the screw from the thread in the waste water bowl.

Furthermore, the resilience of the washer will cause the grating to remain secured to the waste water bowl, even when vibrations in the surroundings occur, e.g. in ships. Thus, a particularly safe engagement is provided, seeing that the washer "bites on to" the surface of the grating and the waste water bowl. This acts against an unintended loosening and is particularly effective if the washer is configured as a so-called flexible sealing washer.

Furthermore, by removal of the grating the resiliency would contribute to raising the grating from the waste water bowl. The resilience of the washer can be provided in a way which contributes to the lifting off of the grating from its arrangement against the waste water bowl. Therefore, in a particular embodiment according to the invention the grating is characterized in that the washer has a generally annular edge area in one plane and a central standard cone shaped edge area surrounding the central opening. The standard cone shaped edge are will be pressed flat when the grating is secured to the waste water bowl, and during screwing off it will rise to its standard cone shape and contribute to lift off the grating instead of the screw being screwed off the washer.

According to a further embodiment the grating according to the invention is characterized in that the central opening is defined by resilient flaps. Thereby the resilience can be achieved in a particularly simple way, and the washer can be arranged on the screw, since the flaps can be easily bent and would then turn into the recess due to their resilience.

According to a further embodiment the grating according to the invention is characterized in that the washer is arranged with the top of the standard cone area pointing away from the grating. This provides a particularly easy mounting and a particularly reliable obstacle against unscrewing of the washer during loosening of the screw.

According to a further embodiment the grating according to the invention is characterized in that it is quadrangular and is provided with a screw at two diametrically opposite angles. Alternatively, screws can be provided in all four angles of the grating. Since the screws are arranged in the angles, the grating can quite easily bent by unscrewing a first screw, so that the need of resilience in the washer is limited.

According to a further embodiment, the grating according to the invention is characterized by an annular shape. Also in such embodiment the screws can be placed along the edge area of the grating, so that the grating quite easily can bend by unscrewing a first screw.

According to a further embodiment, the grating according to the invention is characterized in that the washer is made of steel. This material will be preferred, enabling use of the grating in many environments. Other materials can also be used, taking into account the intended application field for gratings/floor drains.

### Description of the Drawing

The invention will then be explained in more detail with reference to the accompanying drawing, where:
- Fig. 1: shows a top view of a grating according to the invention,
- Fig. 2: shows a perspective view of the grating of Fig. 1;
- Fig. 3: shows a partial section through a detail of the grating of Fig. 1;
- Fig. 4: shows a partially exploded view of the detail of Fig. 3, and
- Fig. 5: shows an enlarged view of a washer for use in the grating.

### Detailed Description of the Invention

In the Figures, corresponding or identical elements are provided with the same reference numbers, and no detailed explanation of such details in connection with each individual figure will necessarily be given.

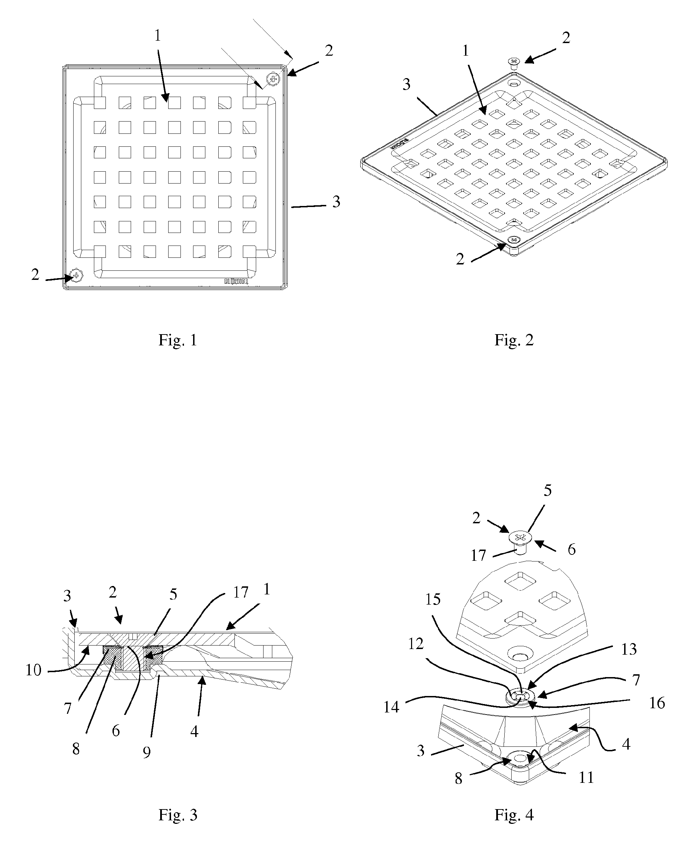

Fig. 1 shows top view of a rectangular steel grating 1 whereby a screw 2 is arranged in two diametrically opposite angles of the grating 1. Furthermore, Fig. 1 shows an edge area 3 of a waste water bowl 4 (cf. Fig. 3) mounted on the grating 1. The arrows indicate a section shown in Fig. 3 through an angle of the grating 1. The screws 2 are provided with a countersunk head 5.

Fig. 2 shows the grating 1 with a mounted screw 2 and with a second screw 2 ready for being screwed into the waste water bowl 4. This situation is illustrative with the purpose of showing the screw 2 in a loose condition. In practice the screw 2 will always be mounted on the grating 1 when delivered from the manufacturer.

As will appear from the sectional view of Fig. 3 the screw 2 is provided with a recess 6 below the head 5. A resilient washer 7 is mounted in the recess 6 so that the screw 2 remains secured to the grating 1.

The screw is secured in a threaded bush 8 which is mounted in the bottom 9 of the waste water bowl 4. By the mounting of the grating the washer 7 is wedged in between the lower side 10 of the grating 1 and the upper side 11 of the threaded bush 8 (see fig. 4).

Fig. 4 is an exploded picture showing that the washer 7 has a generally annular edge area 12 in one plane and a central standard cone shaped edge area 13 surrounding a central opening 14 which accommodates the screw 2. The central opening 14 is defined by four resilient flaps 15 occurring by the formation of slots 16 in the central standard cone shaped edge area 13.

The central opening 14 has a smaller diameter than the outer diameter of the screw thread 17.

The washer 4 is arranged with the top of the standard cone shaped edge area 13 pointing downwards and away from the grating 1.

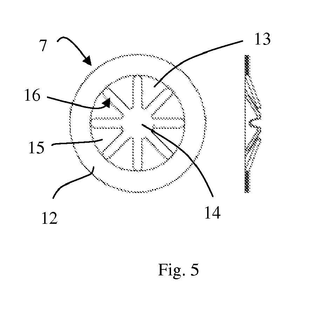

Fig. 5 shows the washer at an enlarged scale for a clearer view of the standard cone shape and the formation of the central opening 14 within the edge area flaps 15 between the slots 16.

## Claims

1. Grating for floor drains and having at least two screws at the edge area of the grating for securing the grating to a waste water bowl, and each being provided with a washer for securing the screw to the grating, **characterized in that** each washer is resilient and has a central opening in engagement with a recess below the screw head and having a smaller diameter than the outer diameter of the screw thread.

2. Grating according to claim 1, **characterized in that** the washer has a generally annular edge area in one plane and a central standard cone shaped edge area surrounding the central opening.

3. Grating according to claim 1 or 2, **characterized in that** the central opening is defined by resilient flaps.

4. Grating according to claim 3, **characterized in that** the washer is arranged with the top of the standard cone shaped edge area pointing away from the grating.

5. Grating according to any of the preceding claims, **characterized in that** it is quadrangular and is provided with a screw at two diametrically opposite angles.

6. Grating according to any of the claims 1-4, **characterized in that** it has a round shape.

7. Grating according to any of the preceding claims, **characterized in that** the washer is made of steel.
